# FASCICULE DE BREVET EUROPEEN

(11) **EP 3 791 366 B1**
(45) Date de publication et mention de la délivrance du brevet: **10.04.2024**
(21) Numéro de dépôt: 19745712.0
(22) Date de dépôt: 25.06.2019
(51) Int. Cl.: G07C 5/08, G07C 5/00

(54) **SYSTÈME D'ÉCHANGE DE DONNÉES DANS UN AÉRONEF**
SYSTEM ZUM AUSTAUSCH VON DATEN IN EINEM FLUGZEUG
SYSTEM FOR EXCHANGING DATA IN AN AIRCRAFT

(30) Priorité: 25.06.2018 FR 1855638
(43) Date de publication de la demande: 17.03.2021
(73) Titulaire: SAFRAN AIRCRAFT ENGINES, 75015 Paris (FR)
(72) Inventeur: BONNET, Guillaume, 77550 MOISSY-CRAMAYEL (FR)
(74) Mandataire: Brevalex
(86) Numéro de dépôt international: PCT/FR2019/051561
(87) Numéro de publication internationale: WO 2020/002824

(56) Documents cités:
- US-A1- 2011 199 976
- US-A1- 2011 216 865
- US-A1- 2018 170 575

## Description

La présente invention se rapporte au domaine de l'échange de données dans un aéronef entre deux dispositifs embarqués reliés entre eux par un lien de communication cadencé à une fréquence de liaison prédéterminée et plus particulièrement, pour les données relatives à la surveillance d'un moteur d'aéronef.

Un moteur d'aéronef est régulièrement surveillé par un calculateur embarqué qui recueille des données issues d'une pluralité de capteurs disposés dans le moteur et son environnement. Ces données de surveillance sont enregistrées dans le calculateur et sont en partie traitées par ce dernier.

En outre, les données de surveillance doivent être fournies à des stations au sol pour réaliser une analyse plus approfondie. Plus précisément, les données de surveillance recueillies par le calculateur de surveillance doivent d'abord être transférées vers un dispositif d'enregistrement embarqué dans l'aéronef. Ce dernier est adapté pour enregistrer les données de surveillance reçues depuis le calculateur de surveillance. Les données de surveillance sont en général récupérées par les stations au sol en fin de vol afin de surveiller le bon fonctionnement du moteur. Ces données de surveillance sont traitées immédiatement dans le cas d'anomalies évidentes et sinon sont analysées pour pronostiquer des éventuelles opérations de maintenance.

Le document US2018/0170575 A1 décrit un système de surveillance pour moteur d'aéronef comprenant un module de surveillance de moteur "WEMS". Le module "WEMS" opère de manière classique en multiplexant les données avant de les transmettre selon les fréquences prédéterminées.

Le document US2011/0199976 A1 décrit un réseau de capteurs dans un aéronef pour collecter des données relatives à l'aéronef. La transmission des signaux entre les capteurs, les routeurs et les différents dispositifs permettant d'assurer l'interface avec le système de traitement de données ou le réseau de l'aéronef est réalisée de manière classique.

Toutefois, la surveillance du moteur d'aéronef n'étant pas une fonction critique au sens de certification, il est possible pour des raisons de coûts et/ou de simplicité que les moyens matériels ou logiciels réalisant ces fonctions ne soient pas compatibles en termes de fréquence avec les données à traiter.

En effet, les données recueillies par le calculateur de surveillance sont produites à des fréquences natives variables et assez élevées par rapport à la fréquence propre de la liaison entre le calculateur de surveillance et le dispositif d'enregistrement.

L'objet de la présente invention est par conséquent de transférer de manière simple des données de surveillance entre deux dispositifs embarqués reliés entre eux par un lien cadencé à une fréquence moins élevée que celles des données de surveillance tout en utilisant très peu de ressources logicielles et/ou matérielles.

La présente invention concerne un système d'échange de données dans un aéronef entre au moins deux dispositifs embarqués reliés entre eux par un lien de communication cadencé à une fréquence de liaison prédéterminée, un premier dispositif comprenant une mémoire tampon étant configuré pour :
- acquérir des signaux de mesure à des fréquences natives auxdits signaux de mesure, les valeurs desdites fréquences natives étant supérieures ou égales à ladite fréquence de liaison prédéterminée,
- élaborer à partir desdits signaux de mesure des trames selon lesdites fréquences natives en stockant en mémoire tampon lesdits signaux de mesure plusieurs fois à des instant différents, et
- transmettre simultanément lesdites trames à ladite fréquence de liaison prédéterminée via ledit lien de communication à un deuxième dispositif.

Ceci permet d'envoyer en temps réel de manière simple et robuste des données à une fréquence supérieure à la fréquence de liaison et sans aucune concaténation de données avant leur transmission ce qui minimise les ressources de stockage et de traitement. De plus, ceci permet d'avoir une grande quantité de données brutes à des hautes fréquences pouvant être très différentes selon leurs natures.

En outre, le dispositif en mode récepteur est configuré pour :
- acquérir lesdites trames à ladite fréquence de liaison prédéterminée, et
- concaténer les données desdites trames pour recréer lesdits signaux de mesure d'origine.

Ceci permet de recevoir les données à une fréquence qui n'est pas compatible avec la fréquence de liaison et sans aucun démultiplexage des données ce qui minimise davantage les ressources de traitement pour la reconstitution des signaux d'origine.

Avantageusement, le lien de communication est une liaison de type Ethernet.

Ceci permet d'avoir une large bande passante entre les différents dispositifs permettant d'échanger entre eux une grande masse de données tout en ne se limitant pas au débit intrinsèque d'un réseau avionique habituel. En plus, ceci permet de mettre en oeuvre l'échange de données non soumises aux contraintes de certification telles que des données relatives à la maintenance, en utilisant des logiciels et matériels courants.

Selon un mode de réalisation de la présente invention, le dispositif en mode émetteur est un calculateur de surveillance d'un moteur d'aéronef, configuré pour surveiller le fonctionnement du moteur et pour détecter, le cas échéant, des anomalies.

Ceci permet la surveillance du bon fonctionnement du moteur d'aéronef et de l'évolution de son état afin de pronostiquer et de planifier les opérations de maintenance avec une grande précision.

Avantageusement, les signaux de mesure comportent des données numériques de détection issues de capteurs embarqués dans le moteur d'aéronef et son environnement, et/ou des données de configuration dudit moteur d'aéronef.

Ceci permet d'avoir une grande quantité de données de différentes natures utiles pour la surveillance du moteur.

Avantageusement, le dispositif en mode récepteur est configuré pour transmettre lesdits signaux de mesure vers une station au sol.

Ceci permet d'analyser les signaux et anticiper les opérations de maintenance sur le moteur d'aéronef.

Avantageusement, lesdits au moins deux dispositifs embarqués sont en outre reliés entre eux par un réseau avionique pour un échange de données opérationnelles destinées au pilotage de l'aéronef. Le réseau avionique est par exemple conforme à la norme ARINC ou AFDX, etc.

L'invention vise également un système de surveillance d'un moteur d'aéronef comportant le système d'échange de données selon l'une quelconque des caractéristiques précédentes, ledit système comportant en outre :
- des capteurs embarqués dans le moteur d'aéronef et son environnement, configurés pour mesurer des paramètres relatifs au moteur d'aéronef et son environnement, et
- un calculateur de surveillance dudit moteur d'aéronef, configuré pour enregistrer les mesures issues desdits capteurs afin de surveiller le fonctionnement dudit moteur d'aéronef.

L'invention vise aussi un moteur d'aéronef équipé du système de surveillance.

L'invention vise également un procédé d'échange de données dans un aéronef à une fréquence de liaison prédéterminée, comportant les étapes suivantes :
- acquisition des signaux de mesure à des fréquences natives auxdits signaux de mesure, les valeurs desdites fréquences natives étant supérieures ou égales à ladite fréquence de liaison prédéterminée,
- élaboration à partir desdits signaux de mesure des trames selon lesdites fréquences natives en stockant lesdits signaux de mesure plusieurs fois à des instant différents, et
- transmission simultanée desdites trames à ladite fréquence de liaison prédéterminée.

D'autres particularités et avantages du dispositif et du procédé selon l'invention ressortiront mieux à la lecture de la description faite ci-après, à titre indicatif mais non limitatif, en référence aux dessins annexés sur lesquels :
[Fig 1] illustre de manière schématique un système ou procédé d'échange de données dans un aéronef, selon un mode de réalisation de l'invention ;
[Fig 2] illustre de manière schématique un système de surveillance d'un moteur d'aéronef, selon un mode préféré de réalisation de l'invention ; et
[Fig 3] illustre de manière schématique un exemple de l'élaboration et de la transmission des données, selon un mode de réalisation de l'invention.

Le principe de l'invention consiste à envoyer des données présentant des fréquences élevées plusieurs fois pour créer une fréquence de transmission moins élevée.

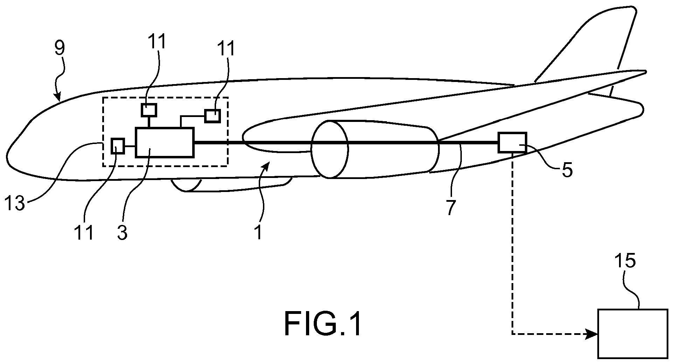

La Fig. 1 illustre de manière schématique un système ou procédé d'échange de données dans un aéronef, selon un mode de réalisation de l'invention.

Ce système 1 comporte au moins deux dispositifs émetteur-récepteur embarqués 3, 5 et un lien de communication 7 reliant entre eux les deux dispositifs 3, 5. Le lien de communication 7 est cadencé à une fréquence de liaison prédéterminée.

Avantageusement, le lien de communication 7 repose sur des protocoles Ethernet (IEEE Standard for Ethernet-802.3), IPv4 (Internet Standard - Protocol specification RFC 731) et UDP (Internet Standard - User Datagram Protocol specification RFC 768). Les liaisons de type Ethernet permettent d'avoir des débits plus conséquents que les liaisons de systèmes avioniques classiques reposant sur des normes de type ARINC (Aeronautical Radio Incorporated).

On notera qu'en plus du lien de communication de type Ethernet, les dispositifs émetteur-récepteur embarqués 3, 5 peuvent aussi être reliés entre eux par un réseau avionique (non représenté) de type ARINC ou AFDX pour un échange de données opérationnelles destinées au pilotage de l'aéronef 9.

Au cours d'un vol, un aéronef 9 procède en général à l'enregistrement d'informations sur son fonctionnement ainsi que sur différents paramètres environnementaux. Ces données enregistrées par des dispositifs embarqués (par exemple, des calculateurs de type FADEC, ACMS, DAR, QAR, etc.) sont issues des mesures fournies par des moyens de mesure ou capteurs 11 intégrés dans l'aéronef 9.

Les capteurs 11 ou moyens de mesure sont configurés pour recueillir au cours du temps des signaux sur des variables relatives à l'aéronef 9 et son environnement, et en particulier à des systèmes spécifiques 13 (par exemple, les moteurs) de l'aéronef 9. Ces signaux comprennent des données opératoires (ou endogènes) décrivant le comportement de chaque système 13, ainsi que des données contextuelles (ou exogènes) décrivant le contexte d'acquisition.

En particulier, pour un système spécifique 13 de l'aéronef 9, un premier dispositif 3, enregistre un certain nombre de signaux de mesure comportant des données numériques de détection issues de capteurs 11 relatifs au système 13. Ces signaux de mesure permettent au premier dispositif 3 de surveiller le bon fonctionnement du système 13.

Avant d'être récupérés par une station au sol, les signaux de mesure doivent être transférés via le lien de communication 7 vers un deuxième dispositif 5 qui est adapté pour transférer les signaux à la station au sol.

Toutefois, les signaux de mesure sont très variés et peuvent présenter des fréquences natives supérieures ou égales à la fréquence de liaison prédéterminée du lien de communication 7.

Conformément à l'invention, le premier dispositif 3 est configuré pour stocker des données de surveillance plusieurs fois à des instants différents avant de les transmettre simultanément à la fréquence de liaison.

Plus précisément, le premier dispositif 3 est configuré pour acquérir depuis les différents capteurs 11 des signaux de mesure à des fréquences natives à ces signaux.

Ensuite, le premier dispositif 3 est configuré pour élaborer à partir des signaux de mesure des trames selon les fréquences natives. Ces trames sont ainsi constituées au fur et à mesure.

En outre, le premier dispositif 3 (en mode émetteur) est configuré pour transmettre les trames à la fréquence de liaison prédéterminée via le lien de communication 7 au deuxième dispositif 5.

Par ailleurs, le deuxième dispositif 5 (en mode récepteur) est configuré pour acquérir les trames en provenance du premier dispositif 3 à la fréquence de liaison prédéterminée.

En outre, le deuxième dispositif 5 est configuré pour concaténer les données des trames pour recréer les signaux de mesure d'origine. Ainsi, le deuxième dispositif 5 obtient les signaux d'origine à leurs fréquences natives qui ne sont pas compatibles avec la fréquence de liaison.

Par ailleurs, le deuxième dispositif 5 est configuré pour transmettre ou fournir les signaux de mesure vers une station 15 au sol.

En effet, le deuxième dispositif 5 peut transférer en fin de vol les signaux de mesure reçus du premier dispositif 3 à une station au sol selon des protocoles de communication de type Wifi, 3/G4 ou par un déchargement filaire.

On notera que le deuxième dispositif 5 peut éventuellement envoyer les signaux de mesure par satellite grâce à un système de transmission de données numériques entre l'aéronef en vol et le sol.

Les stations 15 au sol récupèrent les différents signaux de mesure afin d'analyser ces signaux et d'anticiper les éventuelles opérations de maintenance sur l'aéronef 9.

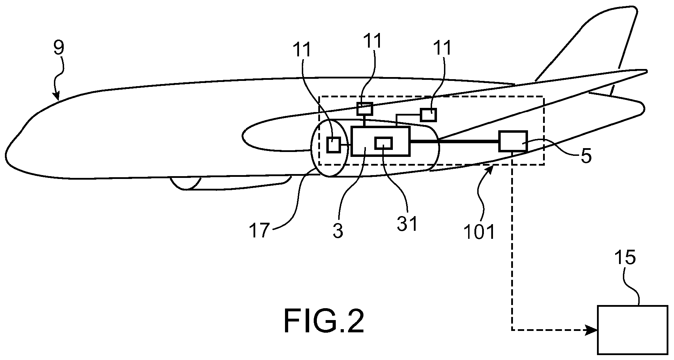

La Fig. 2 illustre de manière schématique un système de surveillance d'un moteur d'aéronef, selon un mode préféré de réalisation de l'invention.

Le système de surveillance 101 comporte le système d'échange de données selon la Fig. 1 et, plus particulièrement, comporte des capteurs 11 embarqués dans le moteur 17 d'aéronef et son environnement ainsi qu'un calculateur de surveillance 3 du moteur 17 d'aéronef.

Ainsi, selon ce mode de réalisation, le calculateur de surveillance 3 correspond au premier dispositif de la Fig. 1. Le calculateur de surveillance 3 est configuré pour surveiller le bon fonctionnement du moteur 17 et pour détecter, le cas échéant, des anomalies. Dans ce cas, les signaux de mesure (également appelé, signaux de surveillance) comportent des données numériques de détection issues des capteurs 11 et/ou des données de configuration du moteur 17 d'aéronef.

Les capteurs 11 sont configurés pour recueillir au cours du temps des signaux sur des variables relatives au moteur 17 de l'aéronef et son environnement, comprennent des données endogènes décrivant le comportement du moteur 17 ainsi que des données exogènes décrivant le contexte d'acquisition.

A titre d'exemple, les données endogènes peuvent comprendre la vitesse de rotation de l'arbre du moteur 17, le débit du carburant, les températures et pressions de fluides en différentes localisations du moteur 17 (par exemple, avant et/ou après compression), la température des gaz d'échappement, etc.

Les données exogènes peuvent comprendre la température extérieure, l'altitude, le poids de l'aéronef 9, l'antigel sur les ailes, la vitesse de l'aéronef 9, etc.

Tous ces signaux de surveillance permettent de surveiller le fonctionnement du moteur 17 et de servir de base à une procédure de maintenance prédictive. Toutefois, ces signaux de surveillance peuvent présenter des fréquences natives supérieures ou égales à la fréquence de liaison prédéterminée du lien de communication 7 qui peut être cadencée à 1 Hz.

Ainsi, le calculateur de surveillance 3 est configuré pour acquérir depuis les différents capteurs 11 des signaux de mesure à des fréquences natives à ces signaux. Ces fréquences peuvent être différentes pour chaque signal et peuvent par exemple présenter des fréquences de 1Hz, 2Hz, 4Hz, 8Hz, 16Hz, 33Hz, 67Hz, etc. selon les besoins.

Ensuite, le calculateur de surveillance 3 est configuré pour élaborer à partir des signaux de mesure des trames selon les fréquences natives.

En outre, le calculateur de surveillance 3 en mode émetteur est configuré pour transmettre les trames à la fréquence de liaison prédéterminée via le lien de communication 7 au deuxième dispositif 5.

Par ailleurs, le deuxième dispositif 5 en mode récepteur est configuré pour acquérir les trames en provenance du calculateur de surveillance 3 à la fréquence de liaison prédéterminée.

En outre, le deuxième dispositif 5 est configuré pour concaténer les données des trames pour recréer les signaux de mesure d'origine avant de les transmettre à une station au sol. Autrement dit, les trames appartenant à chaque signal de mesure sont tout simplement mis bout à bout pour recréer les signaux de mesure.

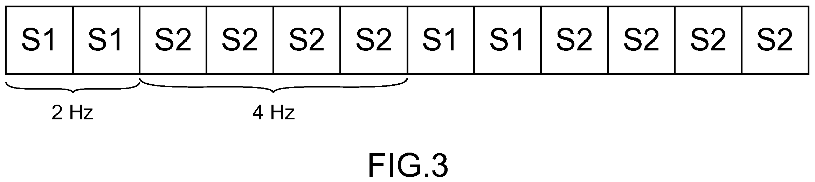

La Fig. 3 illustre de manière schématique un exemple de l'élaboration et de la transmission des données, selon un mode de réalisation de l'invention.

Cet exemple illustre deux types de signaux S1 et S2 ayant des fréquences natives de 2Hz et 4Hz respectivement. Par ailleurs, on suppose à titre d'exemple que la liaison de communication 7 entre le premier dispositif 3 (ou calculateur de surveillance) et le deuxième dispositif 5 est cadencée à 1Hz.

Ainsi, le calculateur de surveillance 3 recueille les signaux de mesure S1 et S2 et crée des trames selon les fréquences natives de 2Hz et 4Hz respectivement. Le signal de mesure S1 est élaboré selon deux trames consécutives tandis que le signal de mesure S2 est élaboré selon quatre trames consécutives. Ainsi, le signal S2 est stocké en mémoire tampon 31 du calculateur de surveillance 3 quatre fois en une seconde aux instants 1/4, 2/4, 3/4, et 4/4 tandis que le signal S1 est stocké en mémoire tampon 31 deux fois en une seconde.

Lorsqu'un envoi est possible, les données placées en mémoire tampon 31 sont toutes envoyées simultanément au deuxième dispositif 5 via le lien de communication 7 à la fréquence de 1Hz.

A chaque envoi, les données du signal S1 sont reçues par deux trames et celles du signal S2 sont reçues par quatre trames. Une fois que les données sont disponibles dans le deuxième dispositif 5, ce dernier concatène les données des trames pour recréer chaque signal de mesure à la fréquence attendue.

Ce mode de réalisation présente l'avantage d'être très systématique de sorte qu'à chaque fois que les données d'un même instant sont disponibles, elles sont placées dans des trames qui peuvent être finalisées instantanément.

On notera que selon ce mode de réalisation, il n'est pas nécessaire de concaténer les données avant leur transmission par le premier dispositif 3 (ou le calculateur de surveillance) et, par conséquent, aucun démultiplexage n'est nécessaire pour reconstituer le signal complet après la réception des données par le deuxième dispositif 5. Ceci facilite la mise en oeuvre d'échange de données par les premier et deuxième dispositifs et minimise leurs ressources matérielles et/ou logicielles.

## Revendications

1. Système d'échange de données dans un aéronef (9) entre au moins deux dispositifs (3, 5) embarqués reliés entre eux par un lien de communication (7) cadencé à une fréquence de liaison prédéterminée, **caractérisé en ce qu'**un premier dispositif (3) comprend une mémoire tampon (31) et est configuré pour :
- acquérir des signaux de mesure à des fréquences natives auxdits signaux de mesure, les valeurs desdites fréquences natives étant supérieures ou égales à ladite fréquence de liaison prédéterminée,
- élaborer à partir desdits signaux de mesure des trames selon lesdites fréquences natives en stockant en mémoire tampon lesdits signaux de mesure plusieurs fois à des instant différents, et
- transmettre simultanément lesdites trames à ladite fréquence de liaison prédéterminée via ledit lien de communication (7) à un deuxième dispositif (5).

2. Système selon la revendication 1, **caractérisé en ce que** le deuxième dispositif (5) est configuré pour :
- acquérir lesdites trames à ladite fréquence de liaison prédéterminée, et
- concaténer les données desdites trames pour recréer lesdits signaux de mesure.

3. Système selon l'une quelconque des revendications précédentes, **caractérisé en ce que** le lien de communication (7) est une liaison de type Ethernet.

4. Système selon l'une quelconque des revendications précédentes, **caractérisé en ce que** le premier dispositif (3) est un calculateur de surveillance d'un moteur (17) d'aéronef, configuré pour surveiller le fonctionnement du moteur (17) et pour détecter, le cas échéant, des anomalies.

5. Système selon l'une quelconque des revendications précédentes, **caractérisé en ce que** le deuxième dispositif (5) est configuré pour transmettre lesdits signaux de mesure vers une station (15) au sol.

6. Système de surveillance d'un moteur (17) d'aéronef comportant le système d'échange de données selon l'une quelconque des revendications précédentes, ledit système comportant en outre :
- des capteurs (11) embarqués dans le moteur (17) d'aéronef et son environnement, configurés pour mesurer des paramètres relatifs au moteur (17) d'aéronef et son environnement, et
- un calculateur de surveillance (3) dudit moteur d'aéronef, configuré pour enregistrer les mesures issues desdits capteurs (11) afin de surveiller le fonctionnement dudit moteur d'aéronef.

7. Moteur d'aéronef équipé du système de surveillance selon la revendication 6.

8. Procédé d'échange de données dans un aéronef à une fréquence de liaison prédéterminée, **caractérisé en ce qu'**il comporte les étapes suivantes :
- acquisition des signaux de mesure à des fréquences natives auxdits signaux de mesure, les valeurs desdites fréquences natives étant supérieures ou égales à ladite fréquence de liaison prédéterminée,
- élaboration à partir desdits signaux de mesure des trames selon lesdites fréquences natives en stockant lesdits signaux de mesure plusieurs fois à des instant différents, et
- transmission simultanée desdites trames à ladite fréquence de liaison prédéterminée.

9. Procédé selon la revendication 8, **caractérisé en ce qu'**il comporte en outre les étapes suivantes :
- acquisition desdites trames à ladite fréquence de liaison prédéterminée, et
- concaténation des données desdites trames pour recréer lesdits signaux de mesure.

## Patentansprüche

1. System zum Austausch von Daten in einem Flugzeug (9) zwischen mindestens zwei integrierten Vorrichtungen (3, 5), die durch eine Kommunikationsverbindung (7) miteinander verbunden sind, welche mit einer vorbestimmten Verbindungsfrequenz getaktet ist, **dadurch gekennzeichnet, dass** eine erste Vorrichtung (3) einen Pufferspeicher (31) umfasst und so konfiguriert ist, dass sie:
- Messsignale mit nativen Frequenzen der Messsignale erfasst, wobei die Werte der nativen Frequenzen größer oder gleich der vorbestimmten Verbindungsfrequenz sind,
- ausgehend von den Messsignalen Rahmen gemäß den nativen Frequenzen unter mehrmaligem Speichern der Messsignale zu unterschiedlichen Zeitpunkten im Pufferspeicher erarbeitet, und
- die Rahmen mit der vorbestimmten Verbindungsfrequenz gleichzeitig über die Kommunikationsverbindung (7) an eine zweite Vorrichtung (5) sendet.

2. System nach Anspruch 1, **dadurch gekennzeichnet, dass** die zweite Vorrichtung (5) so konfiguriert ist, dass sie:
- die Rahmen mit der vorbestimmten Verbindungsfrequenz erfasst, und
- die Daten der Rahmen verkettet, um die Messsignale neu zu erzeugen.

3. System nach einem der vorstehenden Ansprüche, **dadurch gekennzeichnet, dass** die Kommunikationsverbindung (7) eine Verbindung vom Typ Ethernet ist.

4. System nach einem der vorstehenden Ansprüche, **dadurch gekennzeichnet, dass** die erste Vorrichtung (3) ein Rechner zur Überwachung eines Flugzeugtriebwerks (17) ist, der so konfiguriert ist, dass er den Betrieb des Triebwerks (17) überwacht und gegebenenfalls Anomalien erkennt.

5. System nach einem der vorstehenden Ansprüche, **dadurch gekennzeichnet, dass** die zweite Vorrichtung (5) so konfiguriert ist, dass sie die Messsignale zu einer Station (15) am Boden sendet.

6. System zur Überwachung eines Flugzeugtriebwerks (17), das das Datenaustauschsystem nach einem der vorstehenden Ansprüche umfasst, wobei das System weiter umfasst:
- im Flugzeugtriebwerk (17) und seiner Umgebung integrierte Sensoren (11), die so konfiguriert sind, dass sie Parameter messen, die sich auf das Flugzeugtriebwerk (17) und seine Umgebung beziehen, und
- einen Rechner zur Überwachung (3) des Flugzeugtriebwerks, der so konfiguriert ist, dass er die von den Sensoren (11) stammenden Messungen aufzeichnet, um den Betrieb des Flugzeugtriebwerks zu überwachen.

7. Flugzeugtriebwerk, das mit dem Überwachungssystem nach Anspruch 6 ausgestattet ist.

8. Verfahren zum Austausch von Daten in einem Flugzeug mit einer vorbestimmten Verbindungsfrequenz, **dadurch gekennzeichnet, dass** es die folgenden Schritte umfasst:
- Erfassen von Messsignalen mit nativen Frequenzen der Messsignale, wobei die Werte der nativen Frequenzen größer oder gleich der vorbestimmten Verbindungsfrequenz sind,
- Erarbeiten, ausgehend von den Messsignalen, von Rahmen gemäß den nativen Frequenzen unter mehrmaligem Speichern der Messsignale zu unterschiedlichen Zeitpunkten, und
- gleichzeitiges Senden der Rahmen mit der vorbestimmten Verbindungsfrequenz.

9. Verfahren nach Anspruch 8, **dadurch gekennzeichnet, dass** es weiter die folgenden Schritte umfasst:
- Erfassen der Rahmen mit der vorbestimmten Verbindungsfrequenz, und
- Verketten der Daten der Rahmen, um die Messsignale neu zu erzeugen.

## Claims

1. A system for data exchange in an aircraft (9) between at least two on-board devices (3, 5) connected to each other by a communication link (7) clocked at a predetermined link frequency, **characterized in that** a first device (3) comprises a buffer memory (31) and is configured to:
- acquire measurement signals at frequencies native to said measurement signals, the values of said native frequencies being greater than or equal to said predetermined link frequency,
- produce frames from said measurement signals according to said native frequencies by storing said measurement signals in buffer memory several times at different instants, and
- simultaneously transmit said frames at said predetermined link frequency via said communication link (7) to a second device (5).

2. The system according to claim 1, **characterized in that** the second device (5) is configured to:
- acquire said frames at said predetermined link frequency, and
- concatenate the data from said frames to recreate said measurement signals.

3. The system according to any one of the preceding claims, **characterized in that** the communication link (7) is an Ethernet type link.

4. The system according to any one of the preceding claims, **characterized in that** the first device (3) is a computer for monitoring an aircraft engine (17), configured to monitor the operation of the engine (17) and to detect, where appropriate, anomalies.

5. The system according to any one of the preceding claims, **characterized in that** the second device (5) is configured to transmit said measurement signals to a station (15) on the ground.

6. The system for monitoring an aircraft engine (17) including the data exchange system according to any one of the preceding claims, said system further including:
- sensors (11) on board the aircraft engine (17) and its environment, configured to measure parameters relating to the aircraft engine (17) and its environment, and
- a computer (3) for monitoring said aircraft engine, configured to record the measurements from said sensors (11) in order to monitor the operation of said aircraft engine.

7. An aircraft engine equipped with the monitoring system according to claim 6.

8. A method for exchanging data in an aircraft at a predetermined link frequency, **characterized in that** it includes the following steps:
- acquiring measurement signals at frequencies native to said measurement signals, the values of said native frequencies being greater than or equal to said predetermined link frequency,
- producing frames from said measurement signals according to said native frequencies by storing said measurement signals several times at different instants, and
- simultaneously transmitting said frames at said predetermined link frequency.

9. The method according to claim 8, **characterized in that** it further includes the following steps:
- acquiring said frames at said predetermined link frequency, and
- concatenating the data from said frames to recreate said measurement signals.
